(19) Europäisches Patentamt
European Patent Office
Office européen des brevets

(11) EP 4 545 579 A1

(12) EUROPÄISCHE PATENTANMELDUNG

(43) Veröffentlichungstag:
**30.04.2025 Patentblatt 2025/18**

(21) Anmeldenummer: **23205409.8**

(22) Anmeldetag: **24.10.2023**

(51) Internationale Patentklassifikation (IPC):
***C08G 18/02*** (2006.01) ***C08G 18/28*** (2006.01)
***C08G 18/73*** (2006.01) ***C08G 18/79*** (2006.01)

(52) Gemeinsame Patentklassifikation (CPC):
**C08G 18/73; C08G 18/022; C08G 18/2825; C08G 18/792**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Covestro Deutschland AG**
**51373 Leverkusen (DE)**

(72) Erfinder:
- **Eggert, Christoph**
  **50733 Köln (DE)**
- **Woods, Laura**
  **40597 Düsseldorf (DE)**
- **Drumm, Christian**
  **66903 Frohnhofen (DE)**
- **Merkel, Michael**
  **40223 Düsseldorf (DE)**

(74) Vertreter: **Levpat**
**c/o Covestro AG**
**Gebäude K12**
**51365 Leverkusen (DE)**

# (54) VERFAHREN ZUR HERSTELLUNG EINES POLYISOCYANATS AUF BASIS VON 1,5-PENTAMETHYLENDIISOCYANAT

(57) Die vorliegende Erfindung betrifft ein Verfahren zur Herstellung eines Polyisocyanates auf Basis von 1,5-Pentamethylendiisocyanat, umfassend eine Umsetzung einer Isocyanatkomponente, enthaltend mindestens 1,5-Pentamethylendiisocyanat, in Gegenwart mindestens eines Katalysators und gegebenenfalls in Gegenwart eines oder mehrerer Co-Reagenzien, umfassend Alkohole, Amine, Wasser und Kohlenstoffdioxid, zu einem Roh-Polyisocyanat umgesetzt wird, dadurch gekennzeichnet, dass das Roh-Polyisocyanat in einem weiteren Schritt in einem Temperaturbereich von 155 °C bis 175 °C destilliert und in einem weiteren Schritt das Polyisocyanat auf Basis von 1,5-Pentamethylendiisocyanat erhalten wird. Weitere Gegenstände sind ein Polyisocyanat auf Basis von 1,5-Pentamethylendiisocyanat, ein Zwei-Komponenten-System, dessen Verwendung zur Herstellung einer Beschichtung auf einem Substrat, die Beschichtung und der Verbund aus der Beschichtung und dem Substrat.



Processed by Luminess, 75001 PARIS (FR)

## Beschreibung

Die Erfindung betrifft ein Verfahren zur Herstellung eines Polyisocyanates auf Basis von 1,5-Pentamethylendiisocyanat sowie das erhältliche Polyisocyanat. Ein weiterer Gegenstand der Erfindung ist ein, das Polyisocyanat enthaltendes, Zwei-Komponenten-System. Darüber hinaus sind dessen Verwendung zur Herstellung einer Beschichtung auf einem Substrat oder zur Herstellung eines Formkörpers oder als Klebstoff sowie der Verbund aus der Beschichtung oder dem Klebstoff und dem Substrat sowie der Formkörper weitere Gegenstände der Erfindung.

Zwei-Komponenten Polyurethan-Beschichtungen sind seit langem bekannt. Für hochwertige lichtechte Decklacke kommen dabei besonders Beschichtungen aus aliphatischen Polyisocyanaten und Polyolen wie z. B. Polyacrylatpolyolen, Polyesterpolyolen oder Polycarbonatpolyolen zum Einsatz. Als Polyisocyanate kommen für diese hochwertigen Beschichtungen besonders monomerenarme Derivate hergestellt aus 1,6-Hexamethylendiisocyanat (im Folgenden als HDI abgekürzt) zum Einsatz. Besonders geeignet für elastische hochbeständige Beschichtungen sind dafür Isocyanurat-Polyisocyanate des HDI oder Iminooxadiazindion- und Isocyanurat-Strukturen aufweisende Polyisocyanate des HDI, wie sie z. B. in H. J. Laas, R. Halpaap, J. Pedain, J. prakt. Chem. 1994, 336, 185-200 oder in EP 0330966 B1 oder EP 0798299 B1 beschrieben sind. Diese Polyisocyanate haben in der Regel Isocyanatfunktionalitäten ($F_{NCO}$) von 3 oder mehr, wobei man unter Isocyanatfunktionalität die mittlere Zahl an NCO-Gruppen pro Molekül versteht.

Neben dem HDI ist auch 1,5-Pentamethylendiisocyanat (im Folgenden auch als 1,5-Pentandiisocyanat oder Pentamethylendiisocyanat bezeichnet oder als PDI abgekürzt) als Monomer bereits lange bekannt, wie beispielsweise von W. Siefken, Liebigs Ann. Chem. 1949, 562, Seite 122 oder in der DE 1493360 B1 und der DE 1900514 A1 beschrieben.

WO2016146574A1 beschreibt ein Polyisocyanat basierend auf PDI welches eine verbesserte Verträglichkeit mit hoch OH-haltigen Polyolen beschreibt. Es werden bevorzugte Destillationstemperaturen von 120 bis 180°C beschrieben, wobei in den konkreten Beispielen eine Temperatur von 140°C angelegt wird, ohne dabei auf Lagerstabilitäten der resultierenden Produkte einzugehen.

EP2806026A1 beschreibt ein Polyisocyanat basierend auf PDI, wobei die PDI Polyisocyanat Rohlösung in Beispiel 12 über einen Dünnschichtverdampfer bei 150 °C und einem Druck von 0,093 KPa destilliert wird.

EP2543736A1 beschreibt ein Polyisocyanat basierend auf PDI, wobei die PDI Polyisocyanat Rohlösung in Beispiel 23 über einen Dünnschichtverdampfer bei 150 °C und einem Druck von 0,093 KPa destilliert wird.

US2018142123 beschreibt ein Polyisocyanat basierend auf PDI, wobei die Reaktionsmischung in Beispiel 1 bis 12 über einen Dünnschichtverdampfer bei 120 °C und einem Druck von 0,093 KPa destilliert wird und wobei o-Toluolsulfonamid zugegeben wird.

Bei einer verlängerten Lagerung hat sich jedoch gezeigt, dass PDI basierte Polyisocyanate aus dem Stand der Technik in ihrer Viskosität ansteigen, was sich nachteilig auf ihre Verwendung als Vernetzer in Zwei-Komponenten-Systemen auswirkt. Ebenfalls hat sich gezeigt, dass sich die Polyisocyanate auf Basis von PDI über die Lagerdauer eintrüben und somit in Klarlackanwendungen nicht mehr sinnvoll eingesetzt werden können.

Daher war es weiterhin wünschenswert Polyisocyanate auf Basis von PDI bereitzustellen, die bei Lagerung nicht oder zumindest deutlich weniger stark in ihrer Viskosität ansteigen und eintrüben als die im Stand der Technik bekannten Produkte.

Aufgabe der vorliegenden Erfindung war es, ein Verfahren zur Herstellung eines Polyisocyanates auf Basis von 1,5-Pentamethylendiisocyanat bereitzustellen, womit Produkte erhältlich sind, die bei Lagerung nicht oder zumindest deutlich weniger stark in ihrer Viskosität ansteigen und eintrüben.

Diese Aufgabe wurde gelöst durch ein Verfahren zur Herstellung eines Polyisocyanates auf Basis von 1,5-Pentamethylendiisocyanat, umfassend eine Umsetzung einer Isocyanatkomponente, enthaltend mindestens 1,5-Pentamethylendiisocyanat, in Gegenwart mindestens eines Katalysators und gegebenenfalls in Gegenwart eines oder mehrerer Co-Reagenzien, umfassend Alkohole, Amine, Wasser und Kohlenstoffdioxid, zu einem Roh-Polyisocyanat umgesetzt wird, dadurch gekennzeichnet, dass das Roh-Polyisocyanat in einem weiteren Schritt in einem Temperaturbereich von 155 °C bis 175 °C destilliert und in einem weiteren Schritt das Polyisocyanat auf Basis von 1,5-Pentamethylendiisocyanat erhalten wird.

Überraschenderweise wurde gefunden, dass durch Anpassung des Temperaturbereichs während der Destillation des Roh-Polyisocyanats im Wesentlichen zur Entfernung des, bei der Polymerisation notwendigen Monomer Überschusses, eine signifikant bessere Lagerstabilität bezgl. der Viskosität und Trübung erreichen lässt. Als besonders zielführend hat sich ein Temperaturfenster von mindestens 155 °C und höchstens 175°C erwiesen. Unterhalb der 155 °C ist die Lagerstabilität hinsichtlich Viskosität und Trübung signifikant schlechter während bei Temperaturen oberhalb von 175°C zum einen die Energieeffizienz des Produktionsprozesses leidet und zum anderen die Produktqualität bzw. die Prozesssicherheit aufgrund von unerwünschten Nebenreaktion nicht mehr im optimalen Bereich liegt.

Insbesondere sind die Ergebnisse überraschend, da generell anzunehmen war, dass eine möglichst niedrige Destillationstemperatur des Roh-Polyisocyanats und die damit verbundene Vermeidung störender Zersetzungsreaktionen für möglichst trübungsfreie, farbhelle und viskositätsstabile Produkte wichtig sei.

Vorliegend ist der Begriff "destilliert" in dem Satz "dass das Roh-Polyisocyanat in einem weiteren Schritt in einem Temperaturbereich von 155 °C bis 175 °C destilliert wird" so zu verstehen, dass im Wesentlichen das überschüssige 1,5-Pentamethylendiisocyanat aus dem Roh-Polyisocyanat verdampft wird, während das Polyisocyanat auf Basis von 1,5-Pentamethylendiisocyanat weitestgehend in der flüssigen Phase verbleibt.

Bevorzugt bedeuten erfindungsgemäß die Ausdrücke "umfassend" oder "enthaltend", "im Wesentlichen bestehend aus" und besonders bevorzugt "bestehend aus". Die in den Patentansprüchen und in der Beschreibung genannten weiteren Ausführungsformen können beliebig kombiniert werden, sofern sich aus dem Kontext nicht eindeutig das Gegenteil ergibt.

"Mindestens ein", wie hierin verwendet, bezieht sich auf 1 oder mehr, beispielsweise 2, 3, 4, 5, 6, 7, 8, 9 oder mehr. Im Zusammenhang mit Bestandteilen der hierin beschriebenen Verbindungen bezieht sich diese Angabe nicht auf die absolute Menge an Molekülen, sondern auf die Art des Bestandteils. "mindestens eines Katalysators" bedeutet daher beispielsweise, dass nur eine Art von Katalysatoren oder mehrere verschiedene Arten von Katalysatoren, ohne Angaben über die Menge der einzelnen Verbindungen zu machen, enthalten sein können.

Zahlenwerte, die hierin ohne Dezimalstellen angegeben sind, beziehen sich jeweils auf den vollen angegebenen Wert mit einer Dezimalstelle. So steht beispielsweise "99 %" für "99,0 %".

Numerische Bereiche, die in dem Format "in/von x bis y" angegeben sind, schließen die genannten Werte ein. Wenn mehrere bevorzugte numerische Bereiche in diesem Format angegeben sind, ist es selbstverständlich, dass alle Bereiche, die durch die Kombination der verschiedenen Endpunkte entstehen, ebenfalls erfasst werden.

Für den Fall, dass die Gruppen oder Verbindungen als "gegebenenfalls substituiert" oder "substituiert" offenbart werden, sind geeignete Substituenten -F, -Cl, -Br, -I, -OCH3, OCH2CH3, - O-Isopropyl oder -O-n-Propyl, -OCF3, -CF3, -S-C1-6-Alkyl und/oder (gegebenenfalls über ein angehängtes Heteroatom) eine lineare oder verzweigte, aliphatische und/oder alicyclische Struktureinheit mit 1 bis 12 Kohlenstoffatomen, die jeweils als Ersatz für ein kohlenstoffgebundenes Wasserstoffatom des betreffenden Moleküls fungiert. Bevorzugte Substituenten sind Halogen (insbesondere -F, -Cl), $C_1$-$C_6$-Alkoxy (insbesondere Methoxy und Ethoxy), Trifluormethyl und Trifluormethoxy, die jeweils als Ersatz für ein an Kohlenstoff gebundenes Wasserstoffatom des betreffenden Moleküls fungieren.

Im erfindungsgemäßen Verfahren enthält die Isocyanatkomponente wenigstens 1,5-Pentamethylendiisocyanat, welche in Anwesenheit eines Katalysators sowie vorzugsweise mit wenigstens einem linearen, verzweigten und gegebenenfalls substituierten, in der Seitenkette gegenüber Isocyanatgruppen inerten Monoalkohol vermischt wird und zu dem Polyisocyanat auf Basis von 1,5-Pentamethylendiisocyanat umgesetzt wird. Vorzugsweise wird vorher, gleichzeitig und/oder nachher mit wenigstens einem linearen, verzweigten und gegebenenfalls substituierten, in der Seitenkette gegenüber Isocyanatgruppen inerten Monoalkohol zugemischt.

Gegebenenfalls können bei der Herstellung des Polyisocyanates neben 1,5-Pentamethylendiisocyanat weitere Diisocyanate mit aliphatisch, cycloaliphatisch, araliphatisch und/oder aromatisch gebundenen Isocyanatgruppen mitverwendet werden. Hierbei handelt es sich insbesondere um solche des Molekulargewichtsbereichs 140 bis 400, wie z. B. 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 2,4- und 2,6-Diisocyanato-1-methylcyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyana-todicyclohexylmethan, 2,4'-Diisocyanatodicyclohexylmethan, 1-Isocyanato-1-methyl-4(3)isocyanato-methylcyclohexan, Bis-(isocyanatomethyl)-norbornan, 1,3- und 1,4-Bis(isocyanatomethyl)benzol (XDI), 1,3- und 1,4-Bis-(2-isocyanato-prop-2-yl)-benzol (TMXDI), 2,4- und 2,6-Diisocyanatotoluol (TDI), 2,4'- und 4,4'-Diisocyanatodiphenylmethan (MDI), 1,5-Diisocyanatonaphthalin oder beliebige Gemische solcher Diisocyanate.

Diese bei der Herstellung des Polyisocyanates gegebenenfalls mitzuverwendenden Diisocyanate sind beispielsweise ebenfalls durch Phosgenierung in der Flüssig- oder Gasphase erhältlich und kommen, falls überhaupt, in Mengen von bis zu 80 Gew.-%, vorzugsweise bis zu 50 Gew.-%, besonders bevorzugt bis zu 20 Gew.-% und besonders bevorzugt von 0 bis 4 Gew.-%, bezogen auf die Gesamtmenge an eingesetzten Diisocyanaten, zum Einsatz. Besonders bevorzugt enthält die Isocyanatkomponente nur PDI als Diisocyanat.

In einer bevorzugten Ausführungsform kann die Isocyanatkomponente zur Durchführung des erfindungsgemäßen Verfahrens, gegebenenfalls unter Inertgas, wie beispielsweise Stickstoff, und gegebenenfalls in Gegenwart eines Lösungsmittels bei einer Temperatur zwischen 0 und 180 °C, vorzugsweise 20 bis 140 °C, besonders bevorzugt 40 bis 100 °C vorgelegt werden.

Nach dem Vorlegen der Isocyanatkomponente kann der Katalysator bzw. eine Mischung des Katalysators mit einem geeigneten Katalysatorlösungsmittel in der nachstehend angegebenen Menge zugegeben werden. Die Zugabe des Katalysators kann dabei in einer oder mehreren Portionen oder auch kontinuierlich, z. B. mit Hilfe einer geeigneten Dosierpumpe, über die gesamte Dauer der Umsetzung erfolgen.

Die im erfindungsgemäßen Verfahren gegebenenfalls anwesenden ein oder mehrere Co-Reagenzien umfassen Alkohole, Amine, Wasser und Kohlenstoffdioxid und sind vorzugsweise lineare, verzweigte und gegebenenfalls substituierte, in der Seitenkette gegenüber Isocyanatgruppen inerte Monoalkohole, besonders bevorzugt sind Monoalkohole, die 1 bis 18 Kohlenstoffatome, bevorzugt 1 bis 12 Kohlenstoffatome und besonders bevorzugt mit 1 bis 8 Kohlenstoffatome aufweisen.

Besonders bevorzugt ist es, dass die Alkohole primäre oder sekundäre Monoalkohole, ganz besonders bevorzugt primäre Monoalkohole sind. Alternativ und weiter bevorzugt sind Monoalkohole, die 1 bis 18 Kohlenstoffatome, bevorzugt 1 bis 12 Kohlenstoffatome und besonders bevorzugt mit 1 bis 8 Kohlenstoffatome aufweisen.

Geeignete Monoalkohole für das erfindungsgemäße Verfahren sind beispielsweise Methanol, Ethanol, n-Propanol, Isopropanol, n-Butanol, sec-Butanol, iso-Butanol, n-Hexanol, 2-Ethyl-1-hexanol Etheralkohole, wie z. B. 1-Methoxy-2-propanol, 3-Ethyl-3-hydroxymethyloxetan, Tetrahydrofurfurylalkohol, Ethylengylkol-monomethylether, Ethylenglykolmonoethylether, Ethylenglykolmonobutylether, Diethylenglykolmonomethylether, Diethylenglykolmonoethylether, Diethylenglykolmono-butylether oder auch flüssige höhermolekulare Polyethylenglykolmonoalkylether, Polypropylenglykolmonoalkylether, gemischte Polyethylen/polypropylenglykolmonoalkylether; Esteralkohole, wie z. B. Ethylenglykolmonoacetat, Propylen-glykolmonolaurat, Glycerindiacetat, 2,2,4-Trimethyl-1,3-pentandiol-monoisobutyrat; ungesättigte Alkohole wie z. B. Allylalkohol, 1,1-Dimethyl-allylalkohol oder Oleinalkohol; araliphatische Alkohole wie z. B. Benzylalkohol.

Die Temperaturen zur Durchführung des erfindungsgemäßen Verfahrens können in Abhängigkeit von den eingesetzten Verbindungen ausgewählt werden. Bevorzugt ist hierbei jedoch, wenn die Umsetzung bei Temperaturen zwischen ≥ 0 und ≤ 180 °C, vorzugsweise ≥ 20 bis ≤ 140 °C, besonders bevorzugt ≥ 40 bis ≤ 100 °C durchgeführt wird.

Das im erfindungsgemäßen Verfahren mindestens eingesetzte 1,5-Pentamethylendiisocyanat kann nach beliebigen im Stand der Technik bekannten Verfahren zur Herstellung aliphatischer Diisocyanate generiert werden, beispielsweise mit oder ohne Verwendung von Phosgen und ausgehend von, vorzugsweise biotechnologisch durch Decarboxylierung der natürlich vorkommenden Aminosäure Lysin erhaltenem, 1,5-Diaminopentan. Bei Verwendung von Phosgen kann die Phosgenierung von 1,5-Diaminopentan in der Flüssig- oder Gasphase erfolgen.

Hierbei ist es für das erfindungsgemäße Verfahren besonders bevorzugt, wenn 1,5-Diisocyanatopentan durch Phosgenierung von 1,5-Diaminopentan in der Gasphase erhalten wird. Die Phosgenierung von Aminen in der Gasphase an sich ist bekannt und kann beispielsweise, wie in EP 0 289 840 B1, EP 1 319 655 A2, EP 1 555 258 A1, EP 1 275 639 A1, EP 1 275 640 A1, EP 1 449 826 A1, EP 1 754 698 B1, DE 10 359 627 A1 oder in der deutschen Patentanmeldung DE 10 2005 042392 A1 beschrieben, erfolgen. Besonders bevorzugt stammt das 1,5-Diaminopentan aus biobasierter Quelle und wird vorzugsweise biotechnologisch, z.B. durch Fermentation von geeigneter Biomasse erhalten.

Die Art des Trimerisierungskatalysators spielt für die Durchführung des erfindungsgemäßen Verfahrens insofern eine Rolle, als sie die Produktselektivität hinsichtlich der Bildung von überwiegend Allophanat- und Isocyanurat-gruppen enthaltenden Produkten beeinflussen kann.

Als Katalysatoren für die Modifizierung von Isocyanaten haben sich eine Reihe von Verbindungen bewährt, wie beispielsweise in H. J. Laas et al., J. Prakt. Chem. 1994, 336, 185 ff, D. Dieterich Methoden der organischen Chemie (Houben-Weyl), Band E 20 1987, 1741 ff, EP 0649866 A1 (Seite 4, Zeile 7 bis Seite 5, Zeile 15) oder der EP 0896009 A1 (Seite 4, Zeile 17 bis 58) beschrieben.

Geeignete Katalysatoren sind beispielsweise quaternäre Ammoniumcarboxylate, wie z. B. N-(2-Hydroxypropyl)-N,N,N-trimethylammonium-2-ethylhexanoat, N-(2-Hydroxypropyl)-N,N,N-trimethylammonium-2-formiat, N,N,N-Tetramethylammoniumoctoat, quaternäre Ammoniumhydroxide, wie z. B. Tetramethyl-, Tetraethyl-, Trimethylstearyl- und Dimethylethylcyclohexylammoniumhydroxid, N,N,N-Trimethyl-N-(2-hydroxyethyl)-ammoniumhydroxid, N,N,N-Trimethyl-N-(2-hydroxypropyl)-ammoniumhydroxid, N,N,N-Trimethyl-(2-hydroxybutyl)-ammoniumhydroxid, N,N-Dimethyl-n-dodecyl-N-(2-hydroxyethyl)-ammoniumhydroxid, N-(2-Hydroxyethyl)-N,N-dimethyl-N-(2,2'-dihydroxymethylbutyl)-ammoniumhydroxid, N-Methyl-2-hydroxyethyl-morpholiniumhydroxid, N-Methyl-N-(2-hydroxypropyl)-pyrrolidiniumhydroxid, N-Dodecyl-tris-N-(2-hydroxyethyl)-ammoniumhydroxid, Tetra-(2-hydroxyethyl)-ammoniumhydroxid, N,N,N-Trimethyl-N-benzylammoniumhydroxid, oder quaternäre Ammonium- und Phosphoniumhydrogenpolyfluoride, wie z. B. Tetrabutylphosphoniumhydrogendifluorid. Ganz besonders bevorzugte Katalysatoren dieser Gruppe sind N,N,N-Trimethyl-N-(2-hydroxyethyl)-ammoniumhydroxid, N,N,N-Trimethyl-N-(2-hydroxypropyl)-ammoniumhydroxid, N,N,N-Trimethyl-N-(2-hydroxybutyl)-ammoniumhydroxid und insbesondere N,N,N-Trimethyl-N-benzylammoniumhydroxid.

Ebenfalls geeignete Katalysatoren sind beispielsweise Hexamethyldisilazan, Heptamethyldisilazan, Diethyl-1,3-tetramethyl-1,1,3,3-disilazan, Divinyl-1,3-tetramethyl-1,1,3,3-disilazan, Hexaethyldisilazan und Diphenyl-1,3-tetramethyl-1,1,3,3-disilazan. Aus dieser Gruppe ist Hexamethyldisilazan bevorzugt.

Geeignete Mengen des Katalysators können beispielsweise bis zu 0,25 Gew.-%, bevorzugt bis zu 0,1 Gew.-% und besonders bevorzugt bis 0,05 Gew.-% sein.

Bevorzugt kommen beim erfindungsgemäßen Verfahren Katalysatorlösungsmittel zum Einsatz, die gegenüber Isocyanaten reaktive Gruppen tragen und in das Polyisocyanat eingebaut werden können. Beispiele für solche Lösungsmittel sind einfache Alkohole, wie z. B. Methanol, Ethanol, n-Propanol, Isopropanol, n-Butanol, sec-Butanol, iso-Butanol, n-Hexanol, 2-Ethyl-1-hexanol; Etheralkohole, wie z. B. 1-Methoxy-2-propanol, 3-Ethyl-3-hydroxymethyloxetan, Tetrahydrofurfurylalkohol, Ethylengylkol-monomethylether, Ethylenglykolmonoethylether, Ethylenglykolmonobutylether, Diethylenglykolmonomethylether, Diethylenglykolmonothylether, Diethylenglykolmono-butylether oder auch flüssige

höhermolekulare Polyethylenglykolmonoalkylether, Polypropylenglykolmonoalkylether, gemischte Polyethylen/polypropylenglykolmonoalkylether; Esteralkohole, wie z. B. Ethylen-glykolmonoacetat, Propylen-glykolmonolaurat, Glycerindiacetat, 2,2,4-Trimethyl-1,3-pentandiol-monoisobutyrat, ungesättigte Alkohole wie z. B. Allylalkohol, 1,1-Dimethyl-allylalkohol oder Oleinalkohol; araliphatische Alkohole wie z. B. Benzylalkohol; N-monosubstituierte Amide, wie z. B. N-Methylformamid, N-Methylacetamid, Cyanacetamid oder 2-Pyrrolidinon oder beliebige Gemische derartiger Lösungsmittel.

Ganz besonders bevorzugt ist hierbei, wenn der Katalysator in dem entsprechenden Monoalkohol oder Monoalkoholgemisch gelöst eingesetzt wird, der für die Bildung der Allophanatgruppen gewünscht ist. In solchen Fällen entspricht das Katalysatorlösungsmittel dann den oben genannten Monoalkoholen. Die Reihenfolge der Zugabe der umzusetzenden Komponenten beliebig wählbar. Für den Fall, dass ein gelöster Katalysator eingesetzt wird, kann die Menge des Lösungsmittels so gewählt werden, um ein bestimmtes Äquivalentverhältnis der Allophanatgruppen zu den Isocyanuratgruppen einstellen zu können.

Verwendet man stark verdünnte Katalysatorlösungen in gegenüber Isocyanaten reaktiven Katalysatorlösungsmitteln kommt ein Problem hinzu: die bestimmungsgemäße (Haupt-)Reaktion, die Isocyanatmodifizierung, kann zwar durch frühzeitigeren Abbruch der Reaktion bei niedrigeren Umsatzstufen terminiert werden, die Reaktion des Katalysatorlösungsmittels mit den freien Isocyanatgruppen aller im Reaktionsgemisch vorliegender Spezies hingegen nicht, sie läuft immer mindestens bis zur Stufe des Urethans (Carbamates) ab, wobei aber in der Regel erwünscht ist, den Umsatz des Alkohols bis zur Stufe des Allophanates zu führen, was die Gegenwart des aktiven Trimerisierungskatalysators, der im beanspruchten Fall auch für die Allophanatbildung geeignet und erforderlich ist, bedingt. Allophanatgruppen sind gegenüber den aus gleichen Bausteinen aufgebauten Urethanen besser im Polyisocyanat löslich als die entsprechenden Urethane und weisen - zumindest im Fall der Produkte auf Basis monofunktioneller Alkohole - eine gegenüber den Trimeren deutlich niedrigere Viskosität auf. Prinzipiell nachteilig ist hingegen, dass die aus monofunktionellen Alkoholen und Diisocyanaten aufgebauten Allophanatgruppen nur NCOdifunktionell sind und somit die (mittlere) NCO-Funktionalität der Polyisocyanate erniedrigen.

Unter einem Reaktionsgemisch wird im Folgenden eine Mischung von 1,5-Pentamethylendiisocyanat, des Katalysators, des Monoalkohols oder der Monoalkohole sowie gegebenenfalls weiterer Einsatzstoffe und der gebildeten Polyisocyanate verstanden.

In einer weiteren bevorzugten Ausführungsform wird der Verlauf der Umsetzung beim erfindungsgemäßen Verfahren über die Abnahme des NCO-Gehaltes in der Reaktionsmischung verfolgt. Der Gehalt an Isocyanatgruppen in der Reaktionsmischung kann, ebenso wie der Gehalt an Isocyanatgruppen der nach dem erfindungsgemäßen Verfahren erhaltenen Polyisocyanatzusammensetzung, z. B. titrimetrisch gemäß DIN EN ISO 11 909 bestimmt werden.

Gemäß einer weiteren bevorzugten Ausführungsform wird die Umsetzung so weit geführt, dass das Reaktionsgemisch einen Oligomerisierungsgrad von 10 bis 40%, vorzugsweise von 15 bis 30% aufweist. Vorliegend ist unter "Oligomerisierungsgrad" der Prozentsatz, der in der Ausgangsmischung ursprünglich vorhandenen Isocyanatgruppen zu verstehen, der während der erfindungsgemäßen Umsetzung verbraucht wird. Der Oligomerisierungsgrad in Prozent kann nach folgender Formel berechnet werden:

$$\text{Oligomerisierungsgrad} = (\text{NCO Start} - \text{NCO Ende}) / \text{NCO Start} \times 100.$$

Die Umsetzung kann z. B. nach Erreichen des angestrebten Oligomerisierungsgrades abgebrochen werden. Dieser Oligomerisierungsgrad wird im allgemeinen nach einer Reaktionszeit von 30 Minuten bis 8 Stunden, vorzugsweise von 1 bis 6 Stunden erreicht.

Ein Abbruch der Umsetzung kann beispielsweise durch Abkühlen des Reaktionsgemisches auf Raumtemperatur erfolgen. Im Allgemeinen wird die Umsetzung aber durch Zugabe eines Katalysatorgiftes und gegebenenfalls nachfolgendes kurzzeitiges Erhitzen der Reaktionsmischung beispielsweise auf eine oberhalb 80 °C liegende Temperatur beendet.

Geeignete Katalysatorgifte sind beispielsweise anorganische Säuren wie Salzsäure, phosphorige Säure oder Phosphorsäure, Säurechloride wie Acetylchlorid, Benzoylchlorid oder Isophthaloyldichlorid, Sulfonsäuren und Sulfonsäureester, wie Methansulfonsäure, p-Toluol-sulfonsäure, Trifluormethansulfonsäure, Perfluorbutansulfonsäure, Dodecylbenzolsulfon-säure, p-Toluolsulfonsäuremethylester und -ethylester, Mono- und Dialkylphosphate wie Monotridecylphosphat, Dibutylphosphat und Dioctylphosphat aber auch silylierte Säuren, wie Methansulfonsäuretrimethylsilylester, Trifluormethansulfonsäuretrimethylsilylester, Phosphorsäure-tris-(trimethylsilylester) und Phosphorsäurediethylester-trimethylsilylester.

Die zur Beendigung der Umsetzung benötigte Menge des Katalysatorgiftes richtet sich dabei nach der Menge des verwendeten Katalysators; im Allgemeinen wird eine äquivalente Menge des Katalysatorgiftes, bezogen auf den zu Beginn eingesetzten Katalysator, eingesetzt. Berücksichtigt man allerdings eventuell während der Umsetzung auftretende Verluste an Katalysator, so können zur Beendigung der Umsetzung auch schon 20 bis 80 Äquivalent-% des

Katalysatorgiftes, bezogen auf die Menge des ursprünglich eingesetzten Katalysators, ausreichen.

Die genannten Katalysatorgifte können sowohl in Substanz als auch in einem geeigneten Lösungsmittel gelöst eingesetzt werden. Falls ein Lösungsmittel zur Lösung des Katalysatorgiftes zum Einsatz kommt, wird bevorzugt 1,5-Pentandiisocyanat eingesetzt. Der Verdünnungsgrad kann innerhalb eines sehr breiten Bereichs frei gewählt werden, geeignet sind beispielsweise Lösungen ab einer Konzentration von ≥ 25 Gew.-%, bevorzugt ≥ 10 Gew.-%.

Das nach der Reaktion erhaltene Reaktionsgemisch wird vorliegend als Roh-Polyisocyanat bezeichnet. Erfindungswesentlich für das vorliegende Verfahren ist es, dass das Roh-Polyisocyanat auf Basis von 1,5-Pentamethylendiisocyanat in einem weiteren Schritt in einem Temperaturbereich von 155 °C bis 175 °C, bevorzugt 160 °C bis 175 °C und besonders bevorzugt 162 °C bis 173 °C, destilliert und in einem weiteren Schritt das Polyisocyanat auf Basis von 1,5-Pentamethylendiisocyanat erhalten wird.

Die Destillation dient in erster Linie dazu, das Roh-Polyisocyanat von flüchtigen Bestandteilen (überschüssigen monomeren Isocyanatkomponenten und gegebenenfalls mitverwendeten Lösungsmitteln) zu befreien. Vorzugsweise erfolgt die Destillation mittels Fallfilmverdampfer oder Dünnschichtdestillation und besonders bevorzugt mittels Fallfilmverdampfer, bevorzugt im Vakuum, wobei in der letzten Verdampferstufe bevorzugt ein Druck von unter 1,0 mbar, vorzugsweise unter 0,25 mbar, besonders bevorzugt unter 0,1 mbar herrscht. Im Produktionsmaßstab erfolgt die Destillation vorzugsweise mehrstufig, mit Drücken von unter 30 mbar in den ersten Stufen, bevorzugt unter 20 mbar, besonders bevorzugt unter 10 mbar und einem Druck von unter 1mbar, vorzugsweise unter 0,25 mbar, besonders bevorzugt unter 0,1 mbar in der letzten Verdampferstufe.

Im erfindungswesentlichen Schritt herrschen dabei Temperaturen von 155 °C bis 175 °C, bevorzugt 160 °C bis 175 °C und besonders bevorzugt 162 °C bis 173 °C, wobei die weiteren Destillationsbedingungen variiert werden können. In den optionalen oder bevorzugten mehreren Verdampferstufen und/oder weiteren optionalen Destillationsschritten können die Destillationsbedingungen, auch die Destillationstemperaturen, beliebig variiert werden. Es ist möglich verschiedene oder mehrfach dieselbe Destillationsmethode wie Dünnschichtdestillation, Fallfilmverdampfer oder Kurzwegdestillation zu verwenden. Bevorzugt wird der erfindungswesentliche Destillationsschritt bei Temperaturen von 155 °C bis 175 °C, bevorzugt 160 °C bis 175 °C und besonders bevorzugt 162 °C bis 173 °C und in einem Fallfilmverdampfer oder Dünnschichtdestillation und besonders bevorzugt mittels Fallfilmverdampfer durchgeführt.

Die Ausgestaltung der Verdampferstufen, Verdampfungseinheiten und Destillationsapparate für die möglichen Destillationsmethoden kann beliebig gewählt werden. Es kann von Vorteil sein, diese mit Direktdampf und/oder einem Druckwasserkreislauf zu beheizen. Zudem enthalten die Verdampfungseinheiten vorzugsweise mehrere Kondensatoren und Vakuumpumpen. In einer bevorzugten Ausführungsform umfasst oder besteht das Destillationssetup aus drei Verdampferstufen und besonders bevorzugt umfasst oder besteht es aus einem Fallfilmverdampfer als erste Verdampfungsstufe, einem Dünnschichtverdampfer oder Fallfilmverdampfer als zweite Verdampferstufe und einem Kurzwegverdampfer als dritte Verdampferstufe.

In einem weiteren Schritt des erfindungsgemäßen Verfahrens wird das Polyisocyanat auf Basis von 1,5-Pentamethylendiisocyanat erhalten. Dieser Schritt kann beispielsweise der bloße Erhalt des Polyisocyanates auf Basis von 1,5-Pentamethylendiisocyanat sein oder z.B. eine Konfektionierung des Produkts, eine Abfüllung des Produkts oder auch weitere Destillationsschritte umfassen oder daraus bestehen. Der Schritt kann sich unmittelbar an den erfindungswesentlichen Schritt anschließen oder es können ein oder mehrere Schritte dazwischen liegen, wie z.B. eine oder mehrere der vorstehend genannte weiteren Destillationsschritte bei anderen Temperaturen. Ebenso ist es möglich, dass vor dem erfindungsgemäßen Destillationsschritt andere Schritte wie beispielsweise weitere Destillationsschritte folgen.

Durch die überraschenderweise gefundenen vorteilhaften Auswirkungen der speziellen Temperaturbereiche bei der Destillation des Roh-Produkts ergibt sich eine besonders gute Viskositätsstabilität und Trübungsfreiheit über einen langen Lagerungszeitraum. Daher unterscheidet sich das mit dem erfindungsgemäßen Verfahren erhältliche oder hergestellte Polyisocyanat auf Basis von 1,5-Pentamethylendiisocyanat strukturell und in seiner Zusammensetzung von den bisherigen Polyisocyanaten auf Basis von 1,5-Pentamethylendiisocyanat und stellt einen weiteren Gegenstand der vorliegenden Erfindung dar. Ohne an wissenschaftliche Theorien gebunden zu sein vermuten die Erfinderinnen und Erfinder, dass sich mit dem erfindungsgemäßen Verfahren auch die alpha-Nylon Gehalte in den erhältlichen und hergestellten Verfahrensprodukten verringern bzw. die Neigung zur Bildung von alpha-Nylon während der Herstellung aber auch in der anschließenden Lagerung reduziert wird.

Vorliegend ist unter dem Begriff "langem Lagerungszeitraum" eine Dauer von 8 Wochen bei 50 °C oder von 6 Monaten bei Raumtemperatur (20-30 °C) zu verstehen.

Besonders bevorzugt umfasst das Polyisocyanat auf Basis von 1.5, wenigstens eine Isocyanatgruppen aufweisende Verbindung mit wenigstens einer 1,5- verbrückenden Pentamethyleneinheit und einer Isocyanuratgruppe, wobei ein Teil der Verbindungen bevorzugt zusätzlich noch wenigstens eine Allophanatgruppe aufweist, dadurch gekennzeichnet, dass die Polyisocyanatzusammensetzung einen Gehalt an Isocyanurattrimer von ≤ 59 Gew.-% bezogen auf das Gesamtgewicht der Polyisocyanatzusammensetzung aufweist, die Allophanatgruppen einen gegenüber Isocyanatgruppen inerten, organischen Rest tragen und die Allophanatgruppen zu den Isocyanuratgruppen in einem Äquivalentverhältnis von > 0 und ≤ 0,19 vorliegen.

Vorliegend werden unter 1,5- verbrückenden Pentamethyleneinheiten Struktureinheiten verstanden, die aus linearen Pentamethyleneinheiten ($-CH_2CH_2CH_2CH_2CH_2-$) bestehen, die an Position 1 mit dem Stickstoffatom einer Isocyanatgruppe, dem Stickstoffatom einer Isocyanuratgruppe oder dem Stickstoffatom einer Allophanatgruppe, die einen gegenüber Isocyanatgruppen inerten, organischen Rest trägt, und an Position 5 mit dem Stickstoffatom einer Isocyanuratgruppe oder dem Stickstoffatom einer Allophanatgruppe, die einen gegenüber Isocyanatgruppen inerten, organischen Rest trägt, verbunden sind. Hierbei kann die Bezeichnung der Positionen 1 und 5 auch getauscht werden.
Im Rahmen der vorliegenden Erfindung werden unter Trimerstrukturen folgende Isocyanuratstruktureinheiten verstanden, die über die oben beschriebenen Pentamethyleneinheiten gemäß der oligomeren Verteilung statistisch miteinander verknüpft sind:

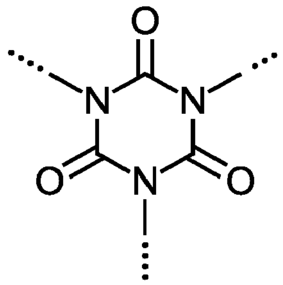

Isocyanuratgruppe

Die Angabe des Gehalts an Isocyanurattrimer als Gewichtsanteil bezogen auf das Gesamtgewicht der Polyisocyanatzusammensetzung bezieht sich erfindungsgemäß auf die Verbindungen in der Polyisocyanatzusammensetzung, die genau eine Isocyanuratgruppe und drei Isocyanatgruppen enthalten.
Vorliegend werden unter Allophanatgruppen folgende Struktureinheiten verstanden:

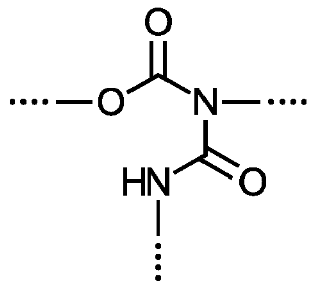

Allophanatgruppe

Die genannten Allophanatgruppen werden vorzugsweise während des Trimerisierungsprozesses statistisch mit in die Oligomerenverteilung der Isocyanurate eingebaut.
In einer weiteren bevorzugten Ausführungsform ist der Gehalt an Isocyanurattrimer ≤ 56 Gew.-%, bevorzugt ≤ 51 Gew.-% und besonders bevorzugt ≤ 47 Gew.-% bezogen auf das Gesamtgewicht der erfindungsgemäßen Polyisocyanatzusammensetzung.
Der Gehalt an Isocyanurattrimer lässt sich beispielsweise durch Gelpermeations-Chormatographie nach der DIN 13885-1- bestimmen.
Gemäß einer weiteren bevorzugten Ausführungsform liegt das Äquivalentverhältnis der Allophanatgruppen zu den Isocyanuratgruppen zwischen ≥ 0,02 und ≤ 0,18, bevorzugt zwischen ≥ 0,05 und ≤ 0,16 und besonders bevorzugt zwischen ≥ 0,10 und ≤ 0,15. Hieraus ergibt sich unter anderem der Vorteil, dass die Ressourcen-Effizienz gegenüber einem reinen Allophanat weiter gesteigert werden kann, was das grundsätzliche Bestreben nach einer ökonomisch und ökologisch optimierten Formulierung unterstützt. Im Vergleich zu reinen Polyisocyanuraten sinkt mit steigendem Allophanatgruppenanteil der Gehalt an reaktiven NCO-Gruppen, wodurch sich die Menge an einzusetzendem Härter gegenüber dem Bindemittel erhöht, was wiederum eine Erhöhung der Lösungsmittelmenge erfordert.
Das Äquivalentverhältnis von Allophanatgruppen zu den Isocyanuratgruppen kann z. B. durch eine NMR-spektroskopische Untersuchung bestimmt werden. Bevorzugt lässt sich hierbei die $^{13}C$-NMR-Spektroskopie, vorzugsweise protonenentkoppelt, einsetzen, da die Allophanat-, Isocyanurat- und/oder Uretdiongruppen charakteristische Signale liefern. Die chemische Verschiebung der oben genannten Verbindungen im NMR-Spektrum ist in der Literatur

bekannt (vgl. D. Wendisch, H. Reiff und D. Dieterich, Angew. Makromol. Chem. 1986, 141, 173-183 und darin zitierte Literatur).

Eine Kombination der beiden vorstehend genannten Ausführungsformen kann besonders vorteilhaft sein, wenn Bindemittel mit einem OH-Gehalt ≥ 7,0 Gew.-% als NCO-funktionelle Vernetzungsmittel zum Einsatz kommen, da hier eine besonders hohe Verträglichkeit vorliegt.

In einer weiteren bevorzugten Ausführungsform wird der gegenüber Isocyanatgruppen inerte organische Rest aus der Gruppe linearer, verzweigter und gegebenenfalls substituierter Reste mit 1 bis 18 Kohlenstoffatomen, bevorzugt mit 1 bis 12 Kohlenstoffatomen und besonders bevorzugt mit 1 bis 8 Kohlenstoffatomen ausgewählt.

In Bezug auf die erfindungsgemäße Polyisocyanatzusammensetzung ist es ebenfalls bevorzugt, wenn der organische Rest über ein primäres oder sekundäres, bevorzugt über ein primäres Kohlenstoffatom mit der Allophanatgruppe verbunden ist.

Geeignete organische Reste sind beispielsweise Methyl-, Ethyl-, 1-Propyl-, 2-Propyl-, n-Butyl-, isoButyl-, sec-Butyl-, n-Hexyl-, 2-Ethyl-1-hexyl-, sowie die zu einer Allophanatgruppe umgesetzten nachstehend genannten Etheralkohole, wie z. B. 1-Methoxy-2-propanol, 3-Ethyl-3-hydroxymethyl-oxetan, Tetrahydrofurfurylalkohol, Ethylengylkol-monomethylether, Ethylenglykolmonoethylether, Ethylenglykolmonobutylether, Diethylenglykolmonomethylether, Diethylenglykolmonoethylether, Diethylenglykolmonobutylether oder auch flüssige höhermolekulare Polyethylenglykolmonoalkylether, Polypropylenglykolmonoalkylether, gemischte Polyethylen/polypropylenglykolmonoalkylether; Esteralkohole, wie z. B. Ethylen-glykolmonoacetat, Propylen-glykolmonolaurat, Glycerindiacetat, 2,2,4-Trimethyl-1,3-pentandiol-monoisobutyrat, ungesättigte Alkohole wie z. B. Allylalkohol, 1,1-Dimethyl-allylalkohol oder Oleinalkohol; araliphatische Alkohole wie z. B. Benzylalkohol.

Gemäß einer weiteren bevorzugten Ausführungsform weist die erfindungsgemäße Polyisocyanatzusammensetzung einen Gehalt an Isocyanatgruppen zwischen ≥ 15% und ≤ 25%, bevorzugt zwischen ≥ 17% und ≤ 24% und besonders bevorzugt zwischen ≥ 20% und ≤ 23%, bezogen auf das Gesamtgewicht der erfindungsgemäßen Polyisocyanatzusammensetzung auf. Dieser Gehalt an Isocyanatgruppen kann auch als NCO-Gehalt bezeichnet werden und lässt sich beispielsweise durch Titration gemäß DIN EN ISO 11909:2007-05 bestimmen.

Es ist weiterhin besonders bevorzugt, wenn der Restmonomerengehalt an 1,5-Pentamethylendiisocyanat im erfindungsgemäßen Polyisocyanat unter 0,5 Gew.-%, bevorzugt unter 0,3 Gew.-% und besonders bevorzugt unter 0,1 Gew.-% liegt. Bei der optionalen Mitverwendung oben genannter Diisocyanate ist es weiterhin bevorzugt, wenn der Restmonomerengehalt an insgesamt eingesetzten Diisocyanate in dem Polyisocyanat unter 0,5 Gew.-%, bevorzugt unter 0,3 Gew.-% und besonders bevorzugt unter 0,1 Gew.-% liegt. Die Bestimmung der Restmonomergehalte erfolgt gaschromatographisch mit internem Standard gemäß DIN EN ISO 10283:2007-11.

In einer weiteren bevorzugten Ausführungsform weist das erfindungsgemäße Polyisocyanat nach DIN EN ISO 3219: 1994-10 bei 23 °C eine Viskosität von ≤ 36.000 mPa*s, bevorzugt von ≤ 24.000 mPa*s und besonders bevorzugt von ≤ 12.000 mPa*s auf. Die dynamischen Viskositäten wurden bei 23 °C und einer Scherrate von 250 $s^{-1}$ nach DIN EN ISO 3219:1994-10 mit einem Physica MCR 51 Rheometer von Anton Paar Germany GmbH bestimmt.

Das mit dem erfindungsgemäßen Verfahren erhältliche oder erhaltene erfindungsgemäße Polyisocyanat eignet sich in hervorragender Weise als Härter für Zwei-Komponenten-Systeme, in denen als gegenüber Isocyanatgruppen reaktive Bindemittel beispielsweise hydroxyfunktionelle Verbindungen wie z. B. Polyetherpolyole, Polyesterpolyole, Polycarbonatpolyole und/oder Polyacrylatpolyole als Reaktionspartner für die Polyisocyanatzusammensetzung zum Einsatz kommen.

Alternativ zu den oben genannten hydroxyfunktionellen Verbindungen kann die erfindungsgemäße Polyisocyanatzusammensetzung aber auch mit Polyaminen, wie z. B. den aus EP-B 0 403 921 bekannten Polyasparaginsäurederivaten, oder auch solchen Polyaminen, deren Aminogruppen in blockierter Form vorliegen, wie z. B. Polyketiminen, Polyaldiminen oder Oxazolanen, kombiniert werden. Aus diesen blockierten Aminogruppen entstehen unter Feuchtigkeitseinfluss freie Aminogruppen und im Falle der Oxazolane auch freie Hydroxylgruppen, die unter Vernetzung mit den Isocyanatgruppen der erfindungsgemäßen Polyisocyanatzusammensetzung abreagieren. Daher ist ein Zwei-Komponenten-System enthaltend eine Komponente A), umfassend wenigstens ein erfindungsgemäßes Polyisocyanat und eine Komponente B), umfassend wenigstens ein gegenüber Isocyanatgruppen reaktives Bindemittel ein weiterer Gegenstand der Erfindung. Im Folgenden wird das Zwei-Komponenten-System auch als Beschichtungsmittel bezeichnet.

Gemäß einer weiteren bevorzugten Ausführungsform umfasst das gegenüber Isocyanatgruppen reaktive Bindemittel wenigstens eine hydroxyfunktionelle Verbindung mit einem Gehalt an Hydroxylgruppen von ≥ 5,0 Gew.-%, bevorzugt von ≥ 7,0 Gew.-% und besonders bevorzugt von ≥ 9,0 Gew.-%, bezogen auf den Feststoffgehalt des gegenüber Isocyanatgruppen reaktiven Bindemittels. Hiermit ist der vorteilhafte Effekt verbunden, dass ein solches Zwei-Komponenten-System eine ausgezeichnete Verträglichkeit aufweist und zu Beschichtungen mit weiter verbesserten physikalischen Eigenschaften führt.

Gegebenenfalls können dem formulierten Beschichtungsmittel weitere auf dem Lacksektor üblichen Hilfs- und Zusatzmittel zugesetzt werden. Als Hilfs- und Zusatzmittel eignen sich hierbei beispielsweise Verlaufshilfsmittel, Farbpigmente, Füllstoffe, Mattierungsmittel, anorganische oder organische Pigmente, Lichtschutzmittel, Lackadditive, wie

Dispergiermittel, Verlaufsmittel, Verdicker, Entschäumer und andere Hilfsmittel, Haftmittel, Fungizide, Bakterizide, Stabilisatoren oder Inhibitoren und Katalysatoren oder Emulgatoren.

Bei der Herstellung der Beschichtungsmittel aus der erfindungsgemäßen Polyisocyanatzusammensetzung werden die genannten gegenüber Isocyanatgruppen reaktiven Bindemittel im allgemeinen in solchen Mengen eingesetzt, die einem Äquivalentverhältnis von Isocyanatgruppen gegenüber Isocyanatgruppen reaktiven Gruppen von 2: 1 bis 0,5:1, bevorzugt von 1,5:1 bis 0,8:1, besonders bevorzugt von 1,1:1 bis 0,9:1 entsprechen.

Das Vermischen des erfindungsgemäßen Polyisocyanats mit den gegenüber Isocyanatgruppen reaktiven Bindemitteln kann durch einfaches Verrühren vor der Verarbeitung der Beschichtungsmittel nach beliebigen Methoden, durch Verwendung von dem Fachmann bekannten mechanischen Hilfsmitteln oder auch unter Verwendung von Zwei-Komponenten-Spritzpistolen erfolgen.

In einer weiteren bevorzugten Ausführungsform können obige Zwei-Komponenten-Systeme bereits bei Raumtemperaturtrocknung hochglänzende, harte und elastische Beschichtungen ergeben, die sich durch hervorragende Lösungsmittelbeständigkeiten auszeichnen. Es ist jedoch ebenso möglich, dass diese Zwei-Komponenten-Systeme unter forcierten Bedingungen bei erhöhter Temperatur bzw. durch Einbrennen bei Temperaturen bis 260°C getrocknet werden.

Neben dem vorstehend beschriebenen bevorzugten Einsatz in unblockierter Form kann das erfindungsgemäße Polyisocyanat aber auch mit den, aus der Polyurethanchemie bekannten Blockierungsmitteln blockiert, im Sinne von Ein-Komponenten-Systemen, eingesetzt werden. Als Blockierungsmittel können hierbei allgemein die in H.-U. Meier-Westhues, Polyurethane - Lacke, Kleb- und Dichtstoffe, Hannover Vincentz Network 2007 auf den Seiten 36-43 oder beispielsweise in der EP 713871 A1 beschriebenen Verbindungen eingesetzt werden.

Im Allgemeinen lassen sich die erfindungsgemäßen Zwei-Komponenten-Systeme hervorragend zur Herstellung einer Beschichtung auf einem Substrat verwenden. Daher ist eine Beschichtung, erhältlich durch Verwendung des erfindungsgemäßen Zwei-Komponenten-Systems ein weiterer Gegenstand der vorliegenden Erfindung.

Die Beschichtungsmittel basierend auf dem erfindungsgemäßen Polyisocyanat können nach bekannten Methoden wie beispielsweise durch Spritzen, Streichen, Fluten oder mit Hilfe von Walzen oder Rakeln auf beliebige Substrate aufgetragen werden. Als Substrate eignen sich beispielsweise Metall, Holz, Glas, Stein, keramische Materialien, Beton, harte und flexible Kunststoffe, Textilien, Leder oder Papier, die vor der Beschichtung gegebenenfalls auch mit üblichen Grundierungen versehen werden können.

Ein weiterer Gegenstand der Erfindung ist ein Verbund aus einer erfindungsgemäßen Beschichtung und einem Substrat mit einer Oberfläche aus Metall und/oder Kunststoff.

Neben den beschriebenen erfindungsgemäßen Beschichtungen kann das erfindungsgemäße Polyisocyanat auch zur Herstellung von Formkörpern, Klebstoffen, Dichtstoffen, Gießelastomeren eingesetzt werden.

Im Nachfolgenden wird die Erfindung an Beispielen näher erläutert.

## Beispiele

Alle Mengenangaben beziehen sich, soweit nicht anders vermerkt, auf die Masse.

Die Ermittlung der NCO-Gehalte erfolgte durch Titration gemäß DIN EN ISO 11909:2007-05.

Die Bestimmung der Restmonomergehalte erfolgte gaschromatographisch mit internem Standard gemäß DIN EN ISO 10283:2007-11.

Die dynamischen Viskositäten wurden bei 23 °C und einer Scherrate von 250 $s^{-1}$ nach DIN EN ISO 3219:1994-10 mit einem Physica MCR 51 Rheometer von Anton Paar Germany GmbH bestimmt.

Die Platin-Cobalt Farbzahl wurde spektrofotometrisch nach DIN EN ISO 6271-2:2005-03 mittels eines LICO 400 Spektrophotometers von Lange bestimmt. Für die Messung wurde eine Probe des Produkts mit N,N-Dimethylacetamid im Verhältnis (50:50) verdünnt, um die Viskosität zu verringern. Die Messlösung wurde in eine Küvette gefüllt und vermessen.

Die Trübung wurde bestimmt nach DIN EN ISO 15715:2006-05.

## Eingesetzte Chemikalien

1,5-Pentamethylendiisocyanat (Covestro Deutschland AG)

Dibutylphosphat (Sigma Aldrich)

2-Ethyl-hexan-1-ol (Sigma Aldrich)

N,N,N-Trimethyl-N-benzylammoniumhydroxid (40%ige Lösung in Methanol) (Sigma Aldrich)

**Synthese eines Polyisocyanates auf Basis von PDI**

In einen Reaktionsgefäß ausgestattet mit Rührer, Rückflusskühler, N2-Durchleitungsrohr und Innenthermometer wurden 1000 Massenteile 1,5-Pentamethylendiisocyanat (PDI) vorgelegt und drei Mal bei Raumtemperatur entgast und mit Stickstoff belüftet. Anschließend wurde der Ansatz auf 60 °C erwärmt und Katalysatorlösung (N,N,N-Trimethyl-N-benzylammoniumhydroxid Lösung in Methanol und 2-Ethylhexanol) so zudosiert, dass die exotherme Trimerisierung bei einer Temperatur von 60-80 °C gehalten wurde und nach Beendigung der Trimerisierung 20 Massenteile 2-Ethylhexanol zugegeben wurden. Bei Erreichen eines NCO-Gehalts von 36,7 Gew.-% wurde die Reaktion mit Dibutylphosphat (equimolare Menge bezogen auf eingesetztes Trimethylbenzylammoniumhydroxid) gestoppt.

Das überschüssige PDI wurde mit Hilfe des im Folgenden beschrieben Destillationssetup abgetrennt.

**Destillationssetun**

Eine dreistufige Vakuumverdampfungseinheit wurde verwendet, um das überschüssige PDI aus dem rohen Reaktionsprodukt zu verdampfen. Die dreistufige Einheit bestand aus einem Fallfilmverdampfer als erste Verdampfungsstufe, einem Dünnschichtverdampfer als zweite Stufe und einem Kurzwegverdampfer als dritte Stufe. Alle Verdampfer wurden mit Direktdampf und/oder einem Druckwasserkreislauf beheizt. Die Verdampfungseinheit enthielt ebenfalls mehrere Kondensatoren und Vakuumpumpen.

**Destillationsversuche**

Mehrere verschiedene nach obiger Synthese hergestellte Roh-Polyisocyanate wurden bei niedrigen und hohen Temperaturen in der Destillation bei konstanter Zuführung des Rohprodukts in der Verdampfungseinheit durchgeführt. Das Vakuumniveau in den drei Verdampfern liegt zwischen ≤ 10 mbar in der ersten Stufe und < 0,1 mbar in der dritten Stufe. Der Druck (Vakuumniveaus) in den drei Verdampfern wurde während der Versuche so geregelt, dass am Ausgang des Verdampfungsstrangs die gleiche freie PDI-Konzentration (ca. 0,05 %) erreicht wurde.

Tabelle 1: Vergleich der Destillationstemperaturen

| | Nummer | Temperatur 1. Stufe (Fallfilmverdampfer) | Temperatur 2. Stufe (Dünnschichtverdampfer) | Temperatur 3. Stufe (Kurzwegverdampfer) |
|---|---|---|---|---|
| **Vergleichsbeispiele** | V1, V2, V3, V4 | 127°C | 132°C | 135°C |
| | V5 | 127°C | 140°C | 140°C |
| **Erfindungsgemäß** | E1, E2, E3, E4, E5, E6, E7, E8 | 145°C | 165°C | 145°C |

**Lagerstabilität**

Von jedem erhaltenen Polyisocyanat auf Basis von PDI wurde eine Probe entnommen und analytisch untersucht, um die Startwerte zu bestimmen. Jede Probe der Polyisocyanate auf Basis von PDI wurde bis zum Rand der Flasche in 125 g Aluminiumflaschen gefüllt. Die Flaschen wurden verschlossen, dann bei einer bestimmten Temperatur für eine definierte Lagerzeit gelagert und danach analysiert.

*Lagerung bei 50 °C:*

Diese Proben wurden 8 Wochen lang bei 50 °C im Ofen gelagert und dann analysiert. Die Lagerung bei 50 °C ist ein weithin akzeptierter Test zur beschleunigten Lagerung. Es wird angenommen, dass 50 °C für 8 Wochen in den meisten Fällen einer Lagerung für 6 Monate bei 20-30 °C ähnelt.

*Lagerung bei 20-30 °C:*

Die Proben wurden wie in der Tabelle dargestellt 6, 7 oder 12 Monate bei 20-30 °C gelagert und danach analysiert.

Tabelle 2: Ergebnisse der Vergleichsbeispiele nach Lagerung bei 50 °C

| Nummer | V2 | | V3 | | V5 | |
|---|---|---|---|---|---|---|
| | Start | 8 Wochen | Start | 8 Wochen | Start | 8 Wochen |
| PDI Monomer (%) | 0.05 | 0.08 | 0.05 | 0.09 | 0.04 | 0.07 |
| Farbe | 10 | 14 | 14 | 12 | 10 | 10 |
| Viskosität 23 °C mPas | 8940 | 10800 | 9645 | 11500 | 9190 | 10100 |
| NCO Gehalt (%) | 21.8 | 21.4 | 21.9 | 21.6 | 22 | 21.4 |
| Trübung | 0.65 | 1.4 | 0.25 | 1.0 | 0.28 | 1.2 |

Tabelle 3: Ergebnisse der erfindungsgemäßen Beispiele nach Lagerung bei 50 °C

| | E1 | | E2 | | E3 | | E4 | |
|---|---|---|---|---|---|---|---|---|
| | Start | 8 Wochen | Start | 8 Wochen | Start | 8 Wochen | Start | 8 Wochen |
| PDI Monomer (%) | 0.05 | 0.06 | 0.05 | 0.05 | 0.05 | 0.06 | 0.05 | 0.07 |
| Farbe | 15 | 23 | 15 | 22 | 26 | 32 | 30 | 35 |
| Viskosität 23 °C mPas | 10032 | 10500 | 9762 | 9970 | 10028 | 10400 | 9111 | 9540 |
| NCO Gehalt (%) | 21.9 | 21.7 | 21.9 | 21.8 | 21.9 | 21.7 | 22 | 21.8 |
| Trübung | 0.24 | 0.4 | 0.15 | 0.2 | 0.15 | 0.3 | 0.21 | 0.2 |

Tabelle 4: Ergebnisse der Vergleichsbeispiele nach Lagerung bei 20-30 °C

| | V1 | | V4 | |
|---|---|---|---|---|
| | Start | 12 Monate | Start | 7 Monate |
| PDI Monomer (%) | 0.06 | 0.16 | 0.06 | 0.08 |
| Farbe | 18 | 49 | 15 | 17 |
| Viskosität 23 °C mPas | 9233 | 10288 | 10125 | 11065 |
| NCO Gehalt (%) | 22.08 | 21.84 | 21.85 | 21.81 |
| Trübung | 0.6 | 2.2 | 0.45 | 0.8 |

Tabelle 5: Ergebnisse der erfindungsgemäßen Beispiele nach Lagerung bei 20-30 °C

| | E5 | | E6 | | E7 | | E8 | |
|---|---|---|---|---|---|---|---|---|
| | Start | 6 Monate | Start | 6 Monate | Start | 6 Monate | Start | 6 Monate |
| PDI Monomer (%) | 0.05 | 0.07 | 0.05 | 0.06 | 0.05 | 0.06 | 0.05 | 0.08 |
| Farbe | 19 | 21 | 29 | 27 | 25 | 26 | 12 | 13 |
| Viskosität 23 °C mPas | 9292 | 9920 | 10240 | 10700 | 10269 | 10900 | 8459 | 9140 |
| NCO Gehalt (%) | 21.8 | 21.9 | 21.8 | 21.7 | 21.8 | 21.7 | 22.0 | 21.8 |
| Trübung | 0.54 | 0.3 | 0.16 | 0.2 | 0.21 | 0.2 | 0.41 | 0.2 |

Diskussion der Ergebnisse:

Die Lagerung der PDI-Polyisocyanate bei 50 °C nach den niedrigen Destillationstemperaturen aus dem Stand der Technik (V1 bis V5) führte in allen Proben zu Trübungswerten nach 8 Wochen über 1,0. Auch die Viskosität der Proben erhöhte sich in allen Proben um mindestens 900 mPas (Tabelle 2). Im Vergleich dazu zeigt Tabelle 3 die Analyseergebnisse nach Lagerung von Proben, die bei erfindungsgemäßer Temperatur destilliert wurden (E1 bis E8). Die Trübung war in diesen Proben nie höher als 0,4. Zudem stieg die Viskosität mit Anstiegen von 200-470 mPas nur geringfügig an. Derselbe Trend ist bei den Proben bei 20-30 °C zu beobachten. Die Trübungswerte von mindestens 0,8 nach der nicht-erfindungsgemäßen Temperaturdestillation sind deutlich schlechter als die Trübungswerde der mit erfindungsgemäßer Destillationstemperatur erhältlichen Produkte (E1 bis E8), die nach den Lagerbedingungen konstant unter 0,3 lagen. Die Viskosität in den Vergleichsbespielen stieg um etwa 1000 mPas an, während die Viskosität der erfindungsgemäßen Produkte nur um etwa 600 mPas zunahm.

Diese Ergebnisse bestätigen, dass die erfindungsgemäße Temperaturdestillation zu niedrigeren Trübungs- und Viskositätswerten von Polyisocyanaten auf Basis von 1,5-Pentamethylendiisocyanat nach 20-30°C und 50 °C Lagerung führt.

## Patentansprüche

1. Verfahren zur Herstellung eines Polyisocyanates auf Basis von 1,5-Pentamethylendiisocyanat, umfassend eine Umsetzung einer Isocyanatkomponente, enthaltend mindestens 1,5-Pentamethylendiisocyanat, in Gegenwart mindestens eines Katalysators und gegebenenfalls in Gegenwart eines oder mehrerer Co-Reagenzien, umfassend Alkohole, Amine, Wasser und Kohlenstoffdioxid, zu einem Roh-Polyisocyanat umgesetzt wird, **dadurch gekennzeichnet, dass** das Roh-Polyisocyanat in einem weiteren Schritt in einem Temperaturbereich von 155 °C bis 175 °C destilliert und in einem weiteren Schritt das Polyisocyanat auf Basis von 1,5-Pentamethylendiisocyanat erhalten wird.

2. Verfahren gemäß Anspruch 1, **dadurch gekennzeichnet, dass** die Destillation in einem Temperaturbereich von 160 °C bis 175 °C und besonders bevorzugt von 162 °C bis 173 °C erfolgt.

3. Verfahren nach Anspruch 1 oder 2, **dadurch gekennzeichnet, dass** die Umsetzung in Gegenwart mindestens eines linearen und/oder verzweigten und/oder gegebenenfalls substituierten Monoalkohols, bevorzugt mit 1 bis 18 Kohlenstoffatomen, besonders bevorzugt mit 1 bis 12 Kohlenstoffatomen und besonders bevorzugt mit 1 bis 8 Kohlenstoffatomen durchgeführt wird.

4. Polyisocyanat auf Basis von 1,5-Pentamethylendiisocyanat, erhältlich oder direkt hergestellt durch ein Verfahren nach einem der Ansprüche 1 bis 3.

5. Polyisocyanat nach Anspruch 4 enthaltend Isocyanatgruppen aufweisende Verbindungen mit wenigstens einer 1,5-verbrückenden Pentamethyleneinheit und einer Isocyanuratgruppe, wobei ein Teil der Verbindungen zusätzlich noch wenigstens eine Allophanatgruppe aufweist, **dadurch gekennzeichnet, dass** die Polyisocyanatzusammensetzung einen Gehalt an Isocyanurattrimer von ≤ 59 Gew.-% bezogen auf das Gesamtgewicht der Polyisocyanatzusammensetzung aufweist, die Allophanatgruppen einen gegenüber Isocyanatgruppen inerten, organischen Rest tragen und die Allophanatgruppen zu den Isocyanuratgruppen in einem Äquivalentverhältnis von > 0 und ≤ 0,19 vorliegen.

6. Polyisocyanat nach Anspruch 4 oder 5, **dadurch gekennzeichnet, dass** der Gehalt an Isocyanurattrimer ≤ 56 Gew.-%, bevorzugt ≤ 51 Gew.-% und besonders bevorzugt ≤ 47 Gew.-%, bezogen auf das Gesamtgewicht des Polyisocyanates ist.

7. Polyisocyanat nach einem der Ansprüche 4 bis 6, **dadurch gekennzeichnet, dass** das Äquivalentverhältnis zwischen ≥ 0,02 und ≤ 0,18, bevorzugt zwischen ≥ 0,05 und ≤ 0,16 und besonders bevorzugt zwischen ≥ 0,10 und ≤ 0,15 liegt.

8. Polyisocyanat nach einem der Ansprüche 4 bis 7, **dadurch gekennzeichnet, dass** der organische Rest ausgewählt wird aus der Gruppe linearer, verzweigter und gegebenenfalls substituierter Reste mit 1 bis 18 Kohlenstoffatomen, bevorzugt mit 1 bis 12 Kohlenstoffatomen und besonders bevorzugt mit 1 bis 8 Kohlenstoffatomen.

9. Polyisocyanat nach einem der Ansprüche 4 bis 8, **dadurch gekennzeichnet, dass** der organische Rest über ein primäres oder sekundäres, bevorzugt über ein primäres Kohlenstoffatom mit der Allophanatgruppe verbunden ist.

10. Polyisocyanat nach einem der Ansprüche 4 bis 9, **dadurch gekennzeichnet, dass** es einen Gehalt an Isocyanatgruppen zwischen ≥ 15% und ≤ 25%, bevorzugt zwischen ≥ 17% und ≤ 24% und besonders bevorzugt zwischen ≥ 20% und ≤ 23% bezogen auf das Gesamtgewicht des Polyisocyanates aufweist.

11. Polyisocyanat nach einem der Ansprüche 4 bis 10, **dadurch gekennzeichnet, dass** es nach DIN EN ISO 3219 bei 23 °C eine Viskosität von ≤ 36.000 mPa*s, bevorzugt von ≤ 24.000 mPa*s und besonders bevorzugt von ≤ 12.000 mPa*s aufweist.

**12.** Zwei-Komponenten-System enthaltend eine Komponente A), umfassend wenigstens ein Polyisocyanat gemäß einem der Ansprüche 4 bis 11 und eine Komponente B), umfassend wenigstens ein gegenüber Isocyanatgruppen reaktives Bindemittel.

**13.** Verwendung des Zwei-Komponenten-Systems nach einem der Ansprüche 11 oder 12 zur Herstellung einer Beschichtung auf einem Substrat.

**14.** Beschichtung, erhältlich durch Verwendung des Zwei-Komponenten-Systems nach Anspruch 13.

**15.** Verbund aus einer Beschichtung nach Anspruch 14 und einem Substrat mit einer Oberfläche aus Metall und/oder Kunststoff.

Europäisches Patentamt
European Patent Office
Office européen des brevets

# EUROPÄISCHER RECHERCHENBERICHT

Nummer der Anmeldung
EP 23 20 5409

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br><br><br>A | CN 110 183 390 A (CNOOC CHANGZHOU PAINT CHEM RES INST CO LTD ET AL.)<br>30. August 2019 (2019-08-30)<br>* Experimental Example 2;<br>Beispiel 8; Tabelle 1 *<br>----- | 1-4,6-15<br><br><br>5 | INV.<br>C08G18/02<br>C08G18/28<br>C08G18/73<br>C08G18/79 |
| X | US 2018/086938 A1 (SCHAEFER HARALD [DE] ET AL) 29. März 2018 (2018-03-29)<br>* Trial series 1;<br>Absatz [0020]; Beispiel PI3 *<br>----- | 1-15 | |
| X | US 2019/292306 A1 (MORITA HIROKAZU [JP] ET AL) 26. September 2019 (2019-09-26)<br>* Preparation Example 14 *<br>----- | 1-15 | |

RECHERCHIERTE SACHGEBIETE (IPC)

C08G

Der vorliegende Recherchenbericht wurde für alle Patentansprüche erstellt

| Recherchenort | Abschlußdatum der Recherche | Prüfer |
|---|---|---|
| München | 26. Februar 2024 | Bergmeier, Martin |

4

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 23 20 5409

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-02-2024

| Im Recherchenbericht angeführtes Patentdokument | Datum der Veröffentlichung | Mitglied(er) der Patentfamilie | Datum der Veröffentlichung |
|---|---|---|---|
| CN 110183390 A | 30-08-2019 | KEINE | |
| US 2018086938 A1 | 29-03-2018 | CN 107709485 A | 16-02-2018 |
| | | EP 3286273 A1 | 28-02-2018 |
| | | JP 6840088 B2 | 10-03-2021 |
| | | JP 2018517013 A | 28-06-2018 |
| | | US 2018086938 A1 | 29-03-2018 |
| | | WO 2016169810 A1 | 27-10-2016 |
| US 2019292306 A1 | 26-09-2019 | CN 109890863 A | 14-06-2019 |
| | | EP 3543266 A1 | 25-09-2019 |
| | | JP 6793204 B2 | 02-12-2020 |
| | | JP WO2018092717 A1 | 17-10-2019 |
| | | TW 201829522 A | 16-08-2018 |
| | | US 2019292306 A1 | 26-09-2019 |
| | | WO 2018092717 A1 | 24-05-2018 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0330966 B1
- EP 0798299 B1
- DE 1493360 B1
- DE 1900514 A1
- WO 2016146574 A1
- EP 2806026 A1
- EP 2543736 A1
- US 2018142123 A
- EP 0289840 B1
- EP 1319655 A2
- EP 1555258 A1
- EP 1275639 A1
- EP 1275640 A1
- EP 1449826 A1
- EP 1754698 B1
- DE 10359627 A1
- DE 102005042392 A1
- EP 0649866 A1
- EP 0896009 A1
- EP 0403921 B
- EP 713871 A1

### In der Beschreibung aufgeführte Nicht-Patentliteratur

- **H. J. LAAS** ; **R. HALPAAP** ; **J. PEDAIN**. *J. prakt. Chem.*, 1994, vol. 336, 185-200
- **W. SIEFKEN**. *Liebigs Ann. Chem.*, 1949, vol. 562, 122
- **H. J. LAAS et al.** *J. Prakt. Chem.*, 1994, vol. 336, 185
- **D. DIETERICH**. *Methoden der organischen Chemie (Houben-Weyl)*, 1987, vol. E 20, 1741
- **D. WENDISCH** ; **H. REIFF** ; **D. DIETERICH**. *Angew. Makromol. Chem.*, 1986, vol. 141, 173-183
- **H.-U. MEIER-WESTHUES**. Polyurethane - Lacke, Kleb- und Dichtstoffe. Hannover Vincentz Network, 2007, 36-43